# EUROPEAN PATENT SPECIFICATION

(11) **EP 2 648 188 B1**
(45) Date of publication and mention of the grant of the patent: **26.07.2017**
(21) Application number: 11845608.6
(22) Date of filing: 25.11.2011
(51) Int. Cl.: B01D 29/01, B01D 29/03, G21C 3/32, G21C 3/322, G21C 3/33, G21C 19/307

(54) **DEBRIS FILTER**
ABLAGERUNGSFILTER
FILTRE DE DÉBRIS

(30) Priority: 03.12.2010 JP 2010270341; 29.03.2011 JP 2011073062
(43) Date of publication of application: 09.10.2013
(73) Proprietor: Nuclear Fuel Industries, Ltd., Tokyo 105-0001 (JP)
(72) Inventor: OWAKI, Masao, Ibaraki 319-1196 (JP); KAWANO, Tomomi, Ibaraki 319-1196 (JP); KUBO, Yuichiro, Ibaraki 319-1196 (JP); MIZUTANI, Yoshitaka, Ibaraki 319-1196 (JP); OZAKI, Tetsuhiro, Ibaraki 319-1196 (JP)
(74) Representative: Regimbeau
(86) International application number: PCT/JP2011/006562
(87) International publication number: WO 2012/073461

(56) References cited:
- JP-A- 4 230 892
- JP-A- 2001 116 872
- JP-A- 2001 141 866
- JP-A- 2003 098 284
- US-A- 4 634 525
- US-A- 5 030 412
- US-A1- 2005 276 367

## Description

### TECHNICAL FIELD

The present invention relates to a debris filter, capable of reducing a pressure loss of coolant as it flows and capturing debris in the coolant.

### BACKGROUND ART

Various debris filters for fuel assemblies have been developed for years.

Patent document 1 discloses "a lower tie plate assembly for a nuclear reactor including a debris catcher comprising apair of superposed plates, and each having a plurality of holes of substantially identical size, shape and pitch, wherein the holes of one of said pair of plates are offset laterally from the holes of the other of said pair of plates" . (See claim 1 and Figures 10-14 of patent document 1.)

However, because the debris catcher of patent document 1 has the two plates superposed so that the holes of one of said pair of plates are offset from the holes of the other of said pair of plates, this arrangement just narrows the paths for coolant. Besides, when debris in a linear shape flows in the direction of the flow of the coolant, there is a probability that the debris passes through a hole in one plate toward a hole in the other plate.

As a method to reduce the probability that debris passes through a lower tie plate, debris filters have been improved so that coolant paths would not be linear.

For example, patent document 2 discloses "a fuel supporting attachment comprising a filter for catching debris included in a coolant on an upstream side of the fuel assembly, wherein the filter has a plurality of holes including at least one bend portion to a degree by which an outlet portion of a hole cannot be seen through from an inlet portion of a hole by a straight line, and the holes are arranged in a pattern of a houndstooth check". (See claim 1, and Figures 3 and 5 of patent document 2.)

Furthermore, patent document 3 teaches "a fuel assembly comprising a foreign object filter having a pair of plate assemblies, each of which includes a lattice formed by a combination of plurality of first plates and a plurality of second plates arranged perpendicularly to the first plates, wherein each plate assembly has the firstplates arrangedparallel to an axis of the lower tie plate and the second plates inclined at an angle to the axis, wherein one of the plate assemblies, or a first plate assembly, is arranged closer to the fuel rods in the axial direction than the other plate assembly, or a second plate assembly; and flow paths formed between adjacent second plates run straight from the inlet to the outlet at an inclined angle to the axis; the flow paths formed in the second plate assembly are inclined to one side, whereas flow paths formed in the first plate assembly are inclined to the opposite side; the lower ends of the first plates of the first plate assembly contact the upper ends of the first plates of the second plate assembly; the outlet end, located at the outlet of one flow path, of one second plate of the second plate assembly is positioned at around the center of the inlet of one flow path of the first plate assembly; and the inlet end, located at the inlet of one flow path, of one second plate of the first plate assembly is positioned at around the center of the outlet of one flow path of the second plate assembly". (See claim 1 and Figures 3-5 of patent document 3.)

However, a pressure loss in the flowing coolant becomes large with the bent flow paths disclosed in Documents 2 and 3. A technical idea of superimposing two plates each having a plurality of holes, such as the one disclosed in Document 1, and of further deforming the formed flow paths is disclosed, for example, in patent document 4.

Patent document 4 discloses "a fuel assembly having a grid in contact with the upper surface of the adapter plate of a lower nozzle having flow holes, whose outlets are subdivided with a lattice plate of the grid and which are formed so that the holes are inclined relative to the direction of flow passages formed out of the plate wherein the holes of one row and the holes of its adjacent rows are inclined in opposite directions". (See claim 1, and Figures 5 and 6 of patent document 4.)

Also, patent document 5 teaches "a debris filter comprising curved plates arranged at equal intervals to one another, each curved plate having a middle portion offset laterally from inlet and outlet portions thereof so that no flow passage runs straight from an inlet thereof to an outlet thereof, wherein each curved plate has a face along which water flows, the surface provided with protrusions locally to subdivide the flow passages". (See claim 1 of patent document 5.)

However, there was no debris filter which realized both of a sufficient reduction in the pressure loss and a satisfactory catch of debris.

When a fuel assembly equipped with a conventional debris filter is immersed in coolant of a nuclear reactor, pieces of debris in the shape of a needle or wire, which are carried in a stream of coolant flowing through the debris filter, are kept in the debris filter and prevented from flowing through the outlet thereof to the downstream side. However, when the circulation of coolant in the nuclear reactor is stopped, or the debris filter is taken out of the coolant, the pieces of debris that have been contained in the debris filter are discharged from the bottom of the debris filter to the outside by gravity, which results in non-removal of the debris from the nuclear reactor. Patent document 6 discloses a debris filter catching a foreign substance included in the coolant on an upstream side of a fuel assembly, the filter having a plurality of through holes to pass the coolant, and the through holes having an inlet portion, an outlet portion and bent portions to a degree by which the outlet portion cannot be seen through from the inlet portion by a straight line.

### PRIOR ART DOCUMENTS

### [Patent Documents]

Patent document 1: JP H8-240680 A
Patent document 2: JP 2004-317522 A
Patent document 3: Japanese Patent No. 3977969
Patent document 4: JP H8-105988 A
Patent document 5: JP 2001-116872 A
Patent document 6: US 2005/276367 A1

### DISCLOSURE OF THE INVENTION

### [Problems to be Solved by the Invention]

An objective to be achieved by the present invention is to provide a debris filter which ensures to capture debris in circulating coolant, yet causes only a small pressure drop in it.

Another objective to be achieved by the present invention is to provide a debris filter from which debris, having been caught by it, is hardly dropped or discharged from it to the outside.

Still another objective to be achieved by the present invention is to provide a debris filter that requires a smaller area to be fitted to.

A further objective to be achieved by the present invention is to provide a debris filter which requires a process of fewer steps to be produced.

### [Means to Solve the Problems]

The present invention, or means for achieving the aforementioned objectives, provides:
(1) A debris filter comprising a plurality of bent plates having a same bent shape, a plurality of first plates having a same first shape, and a plurality of second plates having a same second shape, wherein
   each of the first plates is in the shape of a strip;
   each of the second plates is in the shape of a strip;
   each of the bent plates is composed of a first inclined plate in the shape of a strip, and a second inclined plate in the shape of a strip, wherein the first inclined plate shares a longitudinal edge with the second inclined plate; wherein
   the bent plates are arranged so that the first inclined plates are parallel with each other and the second inclined plates are parallel with each other;
   the bent plates and the first plates are fixed with each other so that the first plates intersect a first longitudinal edge of each first inclinedplate, the first longitudinal edge facing the longitudinal edge that the first inclined plate shares with the second inclined plate;
   the bent plates and the second plates are fixed with each other so that the second plates intersect a second longitudinal edge of each second inclined plate, the second longitudinal edge facing the longitudinal edge that the second inclined plate shares with the first inclined plate; and
   a first inner longitudinal edge of the first plates, the first inner longitudinal edge facing an opposite second plate, does not touch a second inner longitudinal edge of the opposite second plate, the second inner longitudinal edge facing an opposite first plate, whereby the debris filter has bent flow paths formed by the adjacent bent plates, between outlet flow paths formed by the adjacent first plates and the adjacent first inclined plates, and inlet flow paths formed by the adjacent second plates and the adjacent second inclined plates.
(2) The debris filter according to means (1), wherein
   each of the first plates has a plurality of first inclined slots in the first inner longitudinal edge, the first slots inclined in relation to the first inner longitudinal edge;
   each of the second plates has a plurality of second inclined slots in the second inner longitudinal edge, the second slots inclined in relation to the second inner longitudinal edge;
   the first longitudinal edge of each bent plate is inserted into one of the first inclined slots of each first plate and fixed thereto; and
   the second longitudinal edge of each bent plate is inserted into one of the second inclined slots of each second plate and fixed thereto.
(3) The debris filter according to means (2), wherein each of the bent plates has a plurality of first perpendicular slots in the first longitudinal edge, the first perpendicular slots formed perpendicularly to the first longitudinal edge, and a plurality of second perpendicular slots in the second longitudinal edge, the second perpendicular slots formed perpendicularly to the second longitudinal edge; and
   each bent plate is joined with the first plates in such a manner that the first perpendicular slots mesh with the first inclined slots, and each bent plate is joined with the second plates in such a manner that the second perpendicular slots mesh with the second inclined slots.
(4) The debris filter according to means (3), wherein the number of first perpendicular slots in each bent plate is the same as the number of first inclined slots in each first plate; the number of second perpendicular slots in each bent plate is the same as the number of second inclined slots in each second plate; and the number of bent plates is the same as the number of first inclined slots.
(5) The debris filter according to means (1), wherein
   each of the bent plates has a plurality of first perpendicular slots in the first longitudinal edge, the first perpendicular slots formed perpendicularly to the first longitudinal edge, and a plurality of second perpendicular slots in the second longitudinal edge, the second perpendicular slots formed perpendicularly to the second longitudinal edge;
   the first inner longitudinal edge of each first plate is inserted into one of the first perpendicular slots of each bent plate and fixed thereto; and
   the second inner longitudinal edge of each secondplate is inserted into one of the second perpendicular slots of each bent plate and fixed thereto.
(6) The debris filter according to means (1), wherein the first plates are fixed to the bent plates at a first regular interval, and the second plates are fixed to the bent plates at a second regular interval, wherein the second regular interval is larger than the first regular interval.
(7) The debris filter according to means (6), wherein
   each of the first plates has a plurality of first inclined slots in the first inner longitudinal edge, the first slots inclined in relation to the first inner longitudinal edge;
   each of the second plates has a plurality of second inclined slots in the second inner longitudinal edge, the second slots inclined in relation to the second inner longitudinal edge;
   the first longitudinal edge of each bent plate is inserted into one of the first inclined slots of each first plate and fixed thereto; and
   the second longitudinal edge of each bent plate is inserted into one of the second inclined slots of each second plate and fixed thereto.
(8) The debris filter according to means (7), wherein each of the bent plates has a plurality of first perpendicular slots in the first longitudinal edge, the first perpendicular slots formed perpendicularly to the first longitudinal edge, and a plurality of second perpendicular slots in the second longitudinal edge, the second perpendicular slots formed perpendicularly to the second longitudinal edge; and
   each bent plate is joined with the first plates in such a manner that the first perpendicular slots mesh with the first inclined slots, and each bent plate is joined with the second plates in such a manner that the second perpendicular slots mesh with the second inclined slots.
(9) The debris filter according to means (6), wherein
   each bent plate has a plurality of first perpendicular slots in the first longitudinal edge, the first perpendicular slots formed perpendicularly to the first longitudinal edge, and a plurality of second perpendicular slots in the second longitudinal edge, the second perpendicular slots formed perpendicularly to the second longitudinal edge;
   the first inner longitudinal edge of each first plate is inserted into one of the first perpendicular slots of each bent plate and fixed thereto; and
   the second inner longitudinal edge of each secondplate is inserted into one of the second perpendicular slots of each bent plate and fixed thereto.

### [Advantages of the Invention]

The debris filter of the present invention has bent flow paths formed only by the bent plates between outlet flow paths, through which the liquid flows out of the debris filter, formed by the adjacent first plates and the adjacent first inclined plates, and inlet flow paths, through which the liquid flows into the debris filter, formed by the adjacent second plates and the adjacent second inclined plates. The sectional area of each of these bent flow paths is larger than that of each of inlet flow paths formed by the bent plates and the second plates. As a result, the bent flow paths are capable of reducing a pressure loss of coolant as it flows in them and of rectifying flow of the coolant along the bent plates. Therefore the present invention provides a debris filter experiencing only a little pressure loss in the paths through which liquid flows. The debris filter according to the present invention has an inlet portion having inlet flow paths formed by the second plates and the bent plates, and an outlet portion having outlet flow paths formed by the first plates and the bent plates, wherein the sectional area of each inlet flow path and that of each outlet flow path are small. This structure provides the debris filter with two opportunities to catch debris, which ensures the realization of the debris filter capable of infallibly capturing debris.

In an embodiment of the debris filter according to the present invention, the first plates are fixed to each bent plate at a first regular interval, and the second plates are fixed to each bent plate at a second regular interval, wherein the second regular interval is larger than the first regular interval. This structure keeps caught debris inside the filter between the portion formed by the first plates and the bent plates and the portion formed by the second plates and the bent plates. Therefore when the liquid circulation is stopped or the debris filter is taken out of the liquid, debris that has been caught by it is hardly dropped.

In an embodiment of the debris filter according to the present invention, the first and second plates and/or the bent plates have slots, and the plates are joined in such a manner that the slots receive the longitudinal edges, or alternatively the slots in the first and/or second plates engage with the slots in the bent plates, or the slots in the first and/or second plates and those in the bent plates receive each other's plates. This structure makes it possible to reduce the distance between the entrance of coolant and the exit thereof, compared with debris filters equipped with plates having no slots. Employing this structure, the present invention provides a debris filter that requires a smaller space to be installed.

In an embodiment of the debris filter according to the present invention, the number of first inclined slots in each first plate or that of second inclined slots in each second plate is the same as the number of bent plates, the number of first perpendicular slots in each bent plate is the same as the number of first plates, and the number of second perpendicular slots in each bent plate is the same as the number of second plates. This numerical feature liberates assemblers from a labor of checking which plate should be inserted into the slots formed in which plate. Embodying this numerical feature, the present invention provides a debris filter that requires fewer steps for producing it.

### BRIEF DESCRIPTION OF THE DRAWINGS

[Figure 1] Figure 1 is a plan view showing an example of the debris filter according to the present invention.
[Figure 2] Figure 2 is a front view of the debris filter shown in Figure 1.
[Figure 3] Figure 3 is a partially enlarged perspective view of the debris filter shown in Figure 1.
[Figure 4] Figure 4 is a plan view showing a debris filter as a referential example.
[Figure 5] Figure 5(a) shows an aspect viewed from the side of the first plates of the debris filter shown in Figure 1. Figure 5 (b) shows an aspect viewed from the side of the second plates of the same debris filter.
[Figure 6] Figure 6 shows an aspect viewed from the side of the first plates of another example of the debris filter according to the present invention.
[Figure 7] Figure 7 is a plan view showing an embodiment of the first plates of a debris filter according to the present invention.
[Figure 8] Figure 8 is a plan view showing an embodiment of the bent plates of a debris filter according to the present invention.
[Figure 9] Figure 9 is a partially enlarged perspective view of still another example of the debris filter according to the present invention.
[Figure 10] Figure 10(a) shows an aspect viewed from the side of the first plates of the debris filter shown in Figure 9. Figure 10(b) shows an aspect viewed from the side of the second plates of the same debris filter.
[Figure 11] Figure 11 is a plan view showing another embodiment of the first plates of a debris filter according to the present invention.
[Figure 12] Figure 12 is a plan view showing still another embodiment of the bent plates of a debris filter according to the present invention.
[Figure 13] Figure 13 is a plan view showing still another example of the debris filter according to the present invention.
[Figure 14] Figure 14 is a plan view showing a state in which pieces of debris are captured in a debris filter according to the present invention.

### BEST MODE TO CARRY OUT THE INVENTION

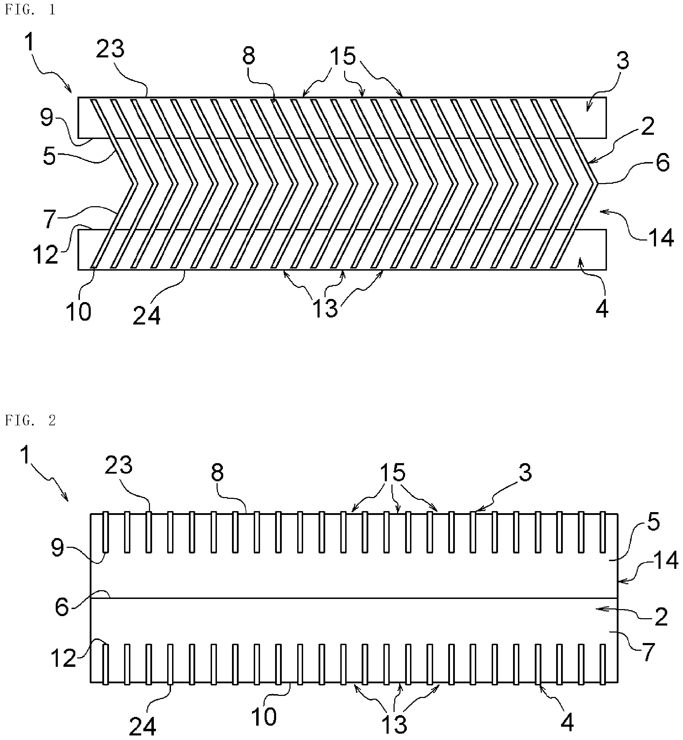

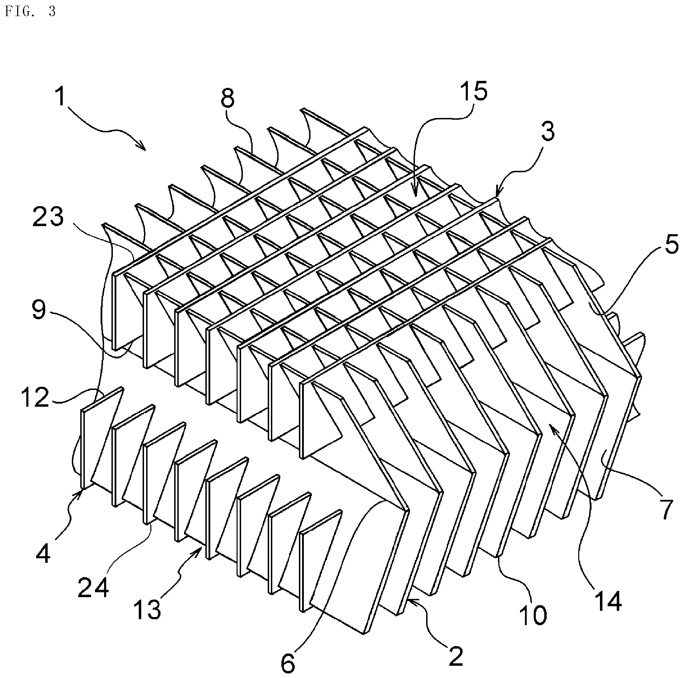

We will explain an example of the debris filter according to the present invention hereinafter, referring to the figures. In Figure 1-3, the example of the debris filter is viewed from the different directions. Figure 1 shows an aspect of the debris filter in a plane including the longitudinal face of a first plate which will be explained hereinafter, and that of the second plate corresponding to said first plate. Figure 2 shows an aspect of the debris filter in a plane including the longitudinal edge of a bent plate, which will be explained hereinafter. Figure 3 is a perspective view of the debris filter. The debris filter, which may be disposed, for example, in a rectangular part inside the lower tie plate for fuel assemblies or may be disposed at a coolant inlet in the side wall of the fuel support in place of the inlet orifice for the reactor core, is capable of capturing debris included in liquid such as coolant circulating through the fuel assemblies.

The debris filter 1 shown in Figure 1 has several bent plates 2 having a same bent shape, several first plates 3 having a same first shape, and several second plates 4 having a same second shape.

Each of the first plates 3 is in the shape of a strip, and each of the second plates 4 in the shape of a strip. Each of the bent plates 2 is composed of a first inclined plate 5 in the shape of a strip, and a second inclined plate 7 in the shape of a strip, wherein the first inclined plate 5 shares a longitudinal edge 6 with the second inclined plate 7.

The size of each part of the first inclined plate 5, that of each part of the second inclined plate 7, and the angle between the first inclined plate 5 and the second inclined plate 7 may be decided suitably, depending on relevant factors such as the ability to capture debris and the pressure drop in the coolant. Furthermore, the measurement of the shorter edge of each first plate 3, that of the longer edge thereof, and the thickness thereof are respectively the same as the measurement of the shorter edge of each second plate 4, that of the longer edge thereof, and the thickness thereof. Therefore the production of a single type of plates in the shape of a strip will provide first plates 3 and second plates 4, which reduce the number of steps of a process for producing a debris filter 1 of this example. It must, however, be added that the dimensions of each first plate are not necessarily the same as those of each second plate, depending on relevant factors such as the ability to capture debris and the pressure drop in the coolant.

The bent plates of a debris filter according to the present invention may be produced by any suitable method, as long as it produces such bent plates that are capable of achieving the objective of the present invention. Specifically, a rectangular plate having a longer edge and a shorter edge may be bent, mountain folded or valley folded, along a virtual longitudinal segment between the midpoint of one shorter edge and that of the other shorter edge. Thus a bent plate having a first inclined plate and a second inclined plate is formed. The first inclined plate and the second inclined plate share the segment as a longitudinal edge. The bent plate may be produced by bending the rectangular plate in this way. Alternatively, a longer edge of a first strip-shaped plate may be joined with a longer edge of a second strip-shaped plate by a suitable method such as welding in such a manner that the two strip-shaped plates are inclined to each other. A bent plate, having a first inclined plate and a second inclined plate that share a longitudinal edge, is thus produced. The measurement of the shorter edges of the first inclined plate of a bent plate and that of the shorter edges of the second inclined plate thereof may be the same as or different from each other.

In the debris filter of the present invention, the bent plates are arranged so that the first inclined plates are parallel with each other and the second inclined plates are parallel with each other.

It is easy to arrange all the bent plates in such a manner that the first inclined plates are parallel with each other and the second inclined plates are parallel with each other, when all the first inclined plates have a same shape, all the second inclined plates have a same shape, and all the bent plates have a same angle between the first inclined plate and the second inclined plate.

When all the first inclined plates have a same first shape and all the second inclined plates a same second shape, and the first inclined plate of each bent plate and the second inclined plate of the same bent plate are different from each other in size, the bent plates have to be arranged in such a manner that the first inclined plates of a same first size are parallel with each other or the second inclined plates of a same second size are parallel with each other.

To the bent plates 2, whose the first inclined plates 5 are arranged parallel with each other and whose second plates 7 are arranged parallel with each other, the first plates 3 are fixed so that a first longitudinal edge 8 of each bent plate, the opposite edge of the longitudinal edge 6 of each first inclined plate 5, crosses the first plates 3. Also to the bent plates 2 are fixed the second plates 4, so that a second longitudinal edge 10 of each bent plate, the opposite edge of the longitudinal edge 6 of each second inclined plate 7, crosses the second plates 4.

The first inclined plates 5 and the first plates 3 are assembled into the debris filter 1 of this embodiment so that the first inclined plates and the first plates cross each other. The bent plates 2 and the first plates 3 are fixed to each other in such a manner the first longitudinal edge 8 of each bent plate 2 intersects a first outer longitudinal edge 23 of each first plate 3, wherein the first outer longitudinal edge 23 is the longer edge on the side of each first plate opposite the side near the second plates 4. The second inclined plates 7 and the second plates 4 are assembled so that that the second inclined plates and the second plates cross each other. The bent plates 2 and the second plates 4 are fixed to each other in such a manner that the second longitudinal edge 10 of each bent plate 2 intersects a second outer longitudinal edge 24 of each second plate 4, wherein the second outer longitudinal edge 24 is the longer edge on the side of each second plate opposite the side near the first plates 3.

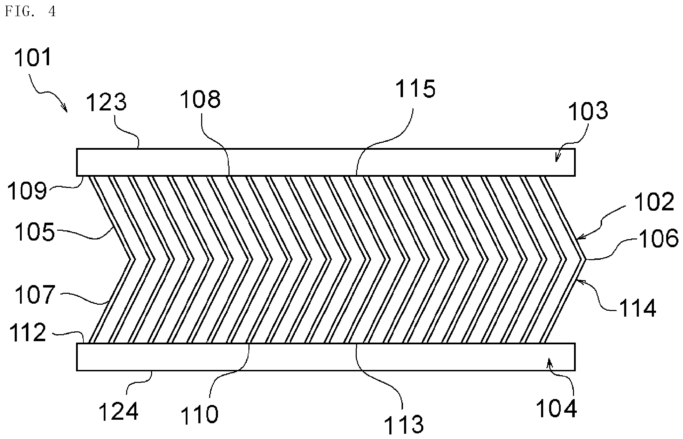

The intersection of the first longitudinal edge of each bent plate and each first plate is a minimal requirement of the present invention. As shown in Figure 4, for example, bent plates 102 and first plates 103 are fixed to each other in such a manner that the first longitudinal edge 108 of each bent plate 102 crosses a first inner longitudinal edge 109 of each first plate 103, wherein the first inner longitudinal edge 109 is the longer edge on the side of each first plate near the second plates 4. In the same way, bent plates 102 and second plates 104 are fixed to each other in such a manner that the second longitudinal edge 110 of each bent plate 102 crosses a second inner longitudinal edge 112 of each second plate 104, wherein the second inner longitudinal edge 112 is the longer edge on the side of each second plate near the first plates 3. However, the debris filter shown in Figure 4 is not included in the present invention.

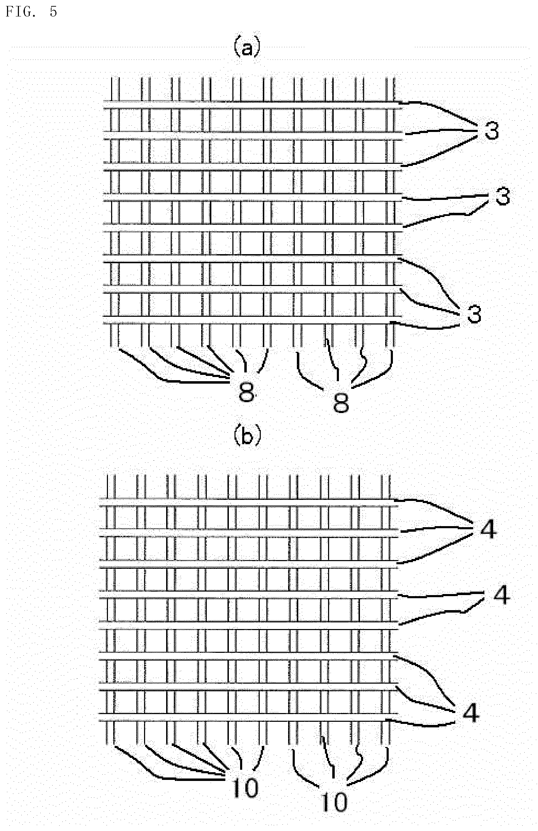

Figure 5(a) shows the debris filter 1 viewed from the side of the first plates 3, whereas Figure 5(b) shows the debris filter 1 viewed from the side of the second plates 4. As shown in Figure 5(a), this example of the debris filter 1 has the bent plates 2 and the first plates 3 assembled in such a manner that the first longitudinal edge 8 of each bent plate 2 perpendicularly intersects the first plates 3. As shown in Figure 5(b), the bent plates 2 and the second plates 4 are also arranged in such a manner that the second longitudinal edge 10 of each bent plate 2 perpendicularly intersects the second plates 4. The distance between the adjacent first plates 3 fixed in each bent plate 2 is the same as the distance between the adjacent second plates 4 fixed in each bent plate 2.

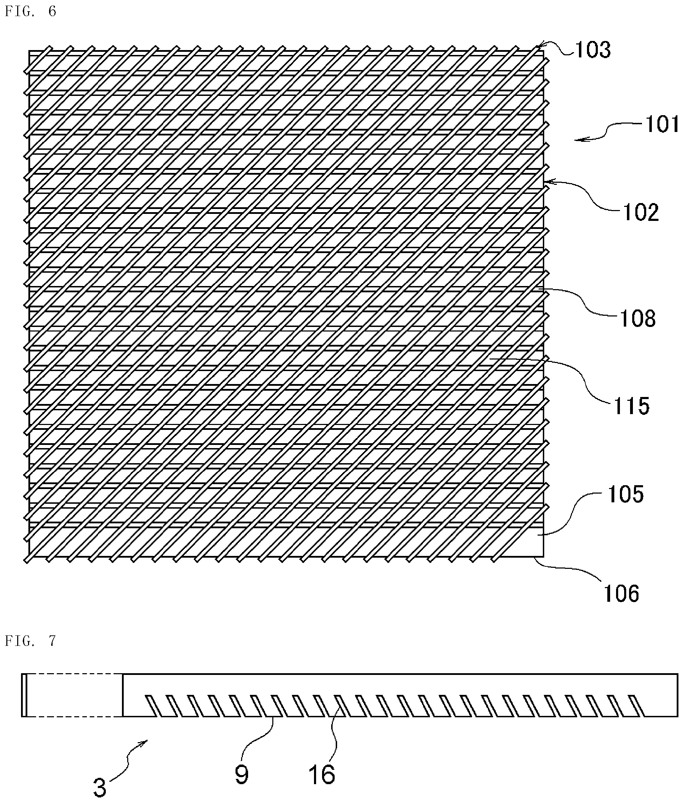

The intersection of the first longitudinal edge of each bent plate and each first plate suffices for a requirement of this invention. As shown in Figure 6, for example, bent plates 102 and first plates 103 may be arranged in such a manner that the first longitudinal edge 108 of each bent plate 102 obliquely crosses each first plate 103. In the same way, although not shown in the figures, bent plates 102 and second plates 104 may be arranged in such a manner that the second longitudinal edge 110 of each bent plate obliquely crosses each second plate 104. The selection between the examples of the debris filter in light of how the first longitudinal edge of each bent plate intersects the first plates and how the second longitudinal edge of each bent plate intersects the second plates, or the selection between the debris filter 1 and the debris filter 101, should be made depending on the shape and dimensions of pieces of debris included in the coolant circulating through the fuel assemblies for which the debris filter is installed.

As shown in Figures 1-3, a first inner longitudinal edge 9 of each first plate 3 does not touch a second inner longitudinal edge 12 of each second plate 4. In other words, the first plates and second plates are arranged with a space in between. When coolant flows from bottom to top in Figure 1, or in the debris filter of this arrangement, a coolant inlet flow path formed by adjacent bent plates 2 and adjacent second plates 4, and a coolant outlet flow path formed by adjacent bent plates 2 and adjacent first plates 3 have a smaller sectional area than a bent flow path formed by adjacent first inclined plates 5 and adjacent second inclined plates 7. Therefore a debris filter 1 has portions with flow paths for coolant's passing through the debris filter 1 each of which has a smaller sectional area, and a portion with coolant flow paths each of which has a larger sectional area.

The flow path with a smaller sectional area through which coolant passes when the coolant flows into the debris filter 1, or the flow path formed by adjacent second plates 4 and adjacent second inclined plates 7 of the bent plates 2 may be hereinafter called an inlet flow path 13. The flow path with a larger sectional area, or the flow path formed only by the inclined bent plates 2 without the aid of the first plates 3 or second plates 4, may be hereinafter called a bent flow path 14. The flow path with a smaller sectional area through which coolant passes when the coolant flows out of the debris filter 1, or the flow path formed by adjacent first plates 3 and adjacent second inclined plates 5 of the bent plates 2 may be hereinafter called an outlet flow path 15.

The action of coolant when it passes through the debris filter 1 will be explained in the following. Coolant flows through inlet flow paths 13, bent flow paths 14 and outlet flow paths 15 in this order. Prior to flowing into the debris filter 1, coolant normally flows through a flow path whose sectional area is larger than that of each inlet flow path 13, that of each bent flow path 14, and that of each outlet flow path 15. Therefore when coolant flows into the inlet flow paths 13, the inlet portion has a large pressure loss. However, when coolant flows further into the bent flow paths 14 whose sectional area is smaller than that of the flow path outside the debris filter 1 yet larger than that of the inlet flow paths 13, the pressure loss in the bent flow paths becomes much smaller than that in the inlet flow paths 13. Coolant is not allowed to flow through the bent flow paths 14 completely freely but the flow thereof is rectified by the bent plates 2. As a result of the rectification, coolant flows smoothly in the zone of the bent flow paths 14, from the end of the inlet flow paths 13 to the entrance of the outlet flow paths 15. Since coolant has been rectified in the bent flow paths 14, the pressure loss in the outlet flow paths 15 does not become large when the coolant flows into the outlet flow paths 15 from the bent flow paths 14. Finally, the coolant flows out of the debris filter 1 through the outlet flow paths 15, with the pressure loss in the outlet flow paths kept small. As a result, compared with conventional debris filters that inevitably have a large pressure loss because of flow paths with a small sectional area through which coolant flows, the debris filter of the present invention 1 has a much reduced pressure loss and allows coolant to flow through it with the pressure loss kept small, due to the bent flow paths 14 formed by the bent plates 2.

Furthermore the debris filter 1 has two opportunities to catch debris because it has flow paths with a small sectional area at two portions thereof: the inlet flow paths 13 and the outlet flow paths 15. Therefore the debris filter 1 is capable of capturing debris more reliably than conventional debris filters that have flow paths with a small sectional area at one portion thereof.

The bent plates, the first plates, and the second plates of the debris filter according to the present invention should be made of materials that are not chemically changed by coolant, in particular, not dissolved in coolant, or not seriously damaged by debris. Examples of the materials may include metals such as stainless steel and Inconel.

The members of the debris filter according to the present invention may be fixed to each other in the following way: Slots are formed in the first and second plates and/or the bent plates, and then plates are inserted into the slots or the slots are engaged with the slots. The debris filter 1, an example, shown in Figures 1-3, has slots in all of the bent plates, the first plates, and the second plates. The bent plates are combined with the first and second plates in such a way that the slots of the bent plates engage with the slots of the first and second plates, or the slots of the bent plates receive the deeper parts of the first and second plates than the depth of the inclined slots.

The bent plates 2 should be fixed to the first plates 3 and the second plates 4 in such a manner that the fixed bent plates, first plates, and second plates are not separated by the pressure given by coolant flowing through the fuel assemblies. For example, the connected parts may be welded to be fixed.

In the debris filter 101, a referential example, shown in Figure 4, the first longitudinal edge 108 of each bent plate 102 contacts the first inner longitudinal edge 109 of each first plate 103, and the second longitudinal edge 110 of each bent plate 102 contacts the second inner longitudinal edge 112 of each second plate 104. A method of fixing the bent plates 102 to the first inner longitudinal edge 109 of each first plate 103 and fixing the bent plates 102 to the second inner longitudinal edge 112 of each second plate 104 may be welding of the contact points between the edges.

We will explain hereinafter embodiments where slots are formed in all of the members. Figure 7 shows one of the first plates 3 of the debris filter 1 shown in Figures 1-3.

The first plate 3 has a plurality of first inclined slots 16 formed in the first inner longitudinal edge 9, which runs along the longer side of the first plate 3. The first slots are inclined in relation to the first inner longitudinal edge. The first plates 3 of the debris filter 1 are the same as the second plates 4 thereof in dimensions; a first plate 3 formed as shown in Figure 7 may be used also as a second plate 4. When first plates 3 and second plates 4 are produced so that the former have different dimensions from the latter, a plurality of second inclined slots should be formed in the second inner longitudinal edge 12 of each second plate 4 in such a manner that the second slots are inclined in relation to the longer side of the second plate, which are not shown in Figure 7.

When slots are formed only in the first plates 3 and the second plates 4, the first longitudinal edge 8 of each bent plate 2 is inserted into one of the first inclined slots 16 of each first plate 3. Each bent plate is fixed to each first plate 3 by friction force between them, and outlet flow paths 15 are thus formed. Also, the second longitudinal edge 10 of each bent plate 2 is inserted into one of the second inclined slots of each second plate 4 and fixed to it, whereby inlet flow paths 13 are formed.

This first way of fixing, in which first inclined slots 16 and second inclined slots are formed, and the first longitudinal edge 8 and the second longitudinal edge 10 of each bent plate 2 are respectively inserted into and fixed to the first inclined slots 16 and the second inclined slots, provides a small-size debris filter, compared with the way of fixing in which the edges having no slots are simply contacted with and fixed to each other. It is because the former way of fixing is capable of shortening the length from the entrance of the inlet flow paths to the exit of the outlet flow paths. Therefore debris filters made by this first way of fixing may be fitted to smaller installing areas.

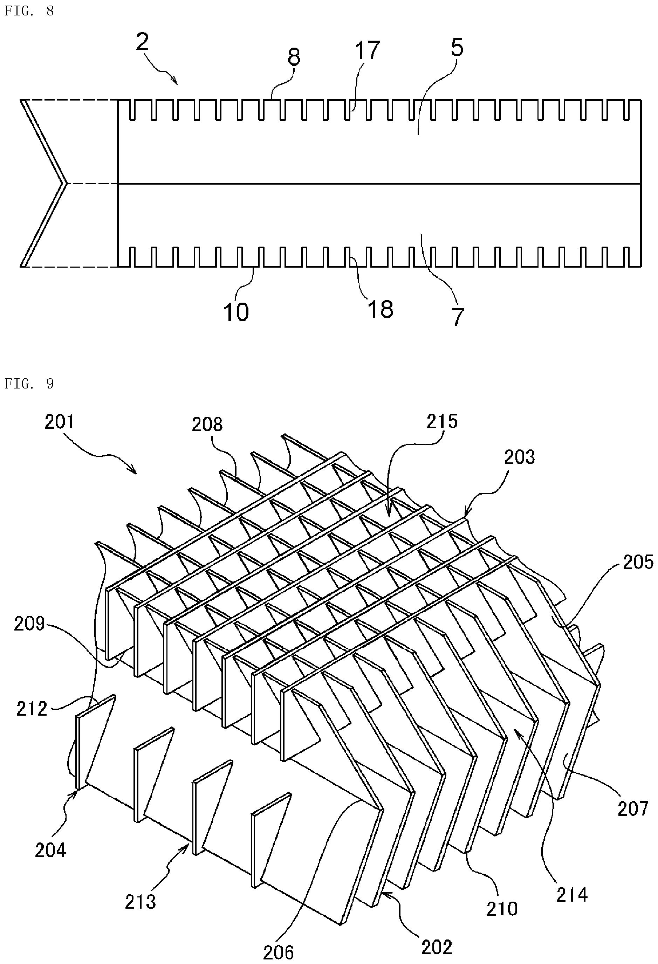

One of the bent plates 2 of the debris filter 1 in Figures 1-3 is shown in Figure 8.

The bent plate 2 has a plurality of first perpendicular slots 17 formed in the first longitudinal edge 8, the first perpendicular slots formed perpendicularly to the first longitudinal edge, and a plurality of second perpendicular slots 18 in the second longitudinal edge 10, the second perpendicular slots formed perpendicularly to the second longitudinal edge. The number of first perpendicular slots 17 is the same as that of second perpendicular slots 18, and the shape of each first perpendicular slot is the same as that of each second perpendicular slot. Thus, when the first plates 3 and the second plates 4 have same dimensions, just to form one type of slots in both longitudinal edges 8, 10 of each bent plate 2 enables the bent plate to engage with the first and second plates, which reduces the steps of the production process.

When slots are formed only in the bent plates 2, the first inner longitudinal edge 9 of each first plate 3 is inserted into and fixed to one of the first perpendicular slots 17 of each bent plate 2. Outlet flow paths 15 are thus formed. Also, the second inner longitudinal edge 12 of each second plate 4 is inserted into one of the second perpendicular slots 18 of each bent plate 2 and fixed to them. Inlet flow paths 13 are thus formed.

This second way of fixing, in which first perpendicular slots 17 and second perpendicular slots 18 are formed in bent plates 2, and the first inner longitudinal edge 9 of each first plate 3 and the second inner longitudinal edge 12 of each second plate 4 are respectively inserted into and fixed to the first perpendicular slots 17 and the second perpendicular slots 18, provides a small-size debris filter, compared with the way of fixing in which the edges having no slots are simply contacted with and fixed to each other. It is because the former way of fixing is capable of shortening the length from the entrance of the inlet flow paths to the exit of the outlet flow paths. Therefore debris filters made by this second way of fixing may be fitted to smaller installing areas.

Another way of forming slots in the bent plates and/or the first and second plates may be forming slots in all of the bent plates and the first and second plates. In this third way, the bent plates and the first plates are combined with and fixed to each other in such a manner that the first perpendicular slots engage with the first inclined slots, and the bent plates and the second plates are combined with and fixed to each other in such a manner that the second perpendicular slots engage with the second inclined slots.

This third way of fixing, as well as the first and second ways, is capable of shortening the length from the entrance of the inlet flow paths to the exit of the outlet flow paths, compared with the way of fixing where the edges having no slots are simply contacted with and fixed to each other. Therefore this third way of fixing provides a small-size debris filter that may be fitted to smaller installing areas.

When all of the first and second plates and the bent plates have slots, preferable should be the embodiment where the number of first perpendicular slots in each bent plate is the same as the number of first plates, the number of second perpendicular slots in each bent plate is the same as the number of second plates, and the number of bent plates is the same as the number of first inclined slots in each first plate and/or that of second inclined slots in each second plate. This embodiment, since it enables manufacturers to form as many slots as the corresponding plates, makes it possible to make first plates and second plates both in a same size at one production and to simplify the process of producing a debris filter.

Another example of the debris filter according to the present invention is shown in Figure 9. The debris filter 201 shown in Figure 9 is different from the debris filter 1 shown in Figures 1-3 in the arrangement of the first and second plates. Specifically, as shown in Figure 9, the distance between adjacent second plates 204, fixed to bent plates 202, is larger than that between adjacent first plates 203, also fixed to the bent plates 202. On the other hand, as shown in Figure 3, the distance between adjacent second plates 4, fixed to the bent plates 2, is the same as that between adjacent first plates 3, also fixed to the bent plates 2.

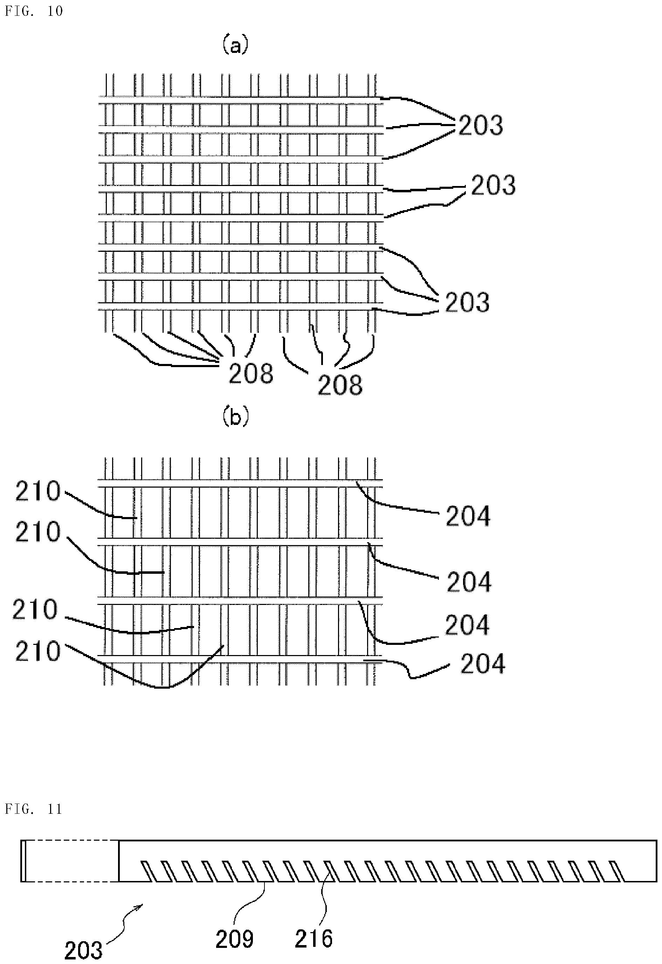

Figure 10(a) shows the debris filter 201 viewed from the side of the first plates 203, whereas Figure 10(b) shows the same debris filter viewed from the side of the second plates 204. As shown in Figure 10(a), the bent plates 202 and the first plates 203 are arranged in such a manner that the first longitudinal edge 208 of each bent plate 202 perpendicularly intersects the first plates 203. As shown in Figure 10(b), the bent plates 202 and the second plates 204 are also arranged in such a manner that the second longitudinal edge 210 of each bent plate 202 perpendicularly intersects the second plates 204.

As mentioned hereinbefore, the distance between adjacent second plates 204 on the bent plates 202, shown in Figure 10(b), is larger than that between adjacent first plates 203 on the same bent plates 202, shown in Figure 10(a). For convenience of explanation, the flow path formed by adjacent second plates 204 and the second inclined plates 207 of adjacent bent plates 202 may be hereinafter called an inlet flow path 213, the flow path formed by adjacent first plates 203 and the first inclined plates 205 of adjacent bent plates 202 may be hereinafter called an outlet flow path 215. The area of the section of the inlet flow path 213 perpendicular to the direction of the coolant flow is larger than that of the section of the outlet flow path 215 perpendicular to the direction of the coolant flow. In other words, a second lattice formed by the second plates 204 and second longitudinal edges 210 of the bent plates 202, shown in Figure 10(b), has a smaller reticular density than a first lattice formed by the first plates 203 and first longitudinal edges 208 of the bent plates 202, shown in Figure 10(a), has.

In the debris filter of this example, the sectional area of each inlet flow path 213 is larger than that of each outlet flow path 215. In other words, the reticular density of the first lattice comprised of the inlet flow paths 213 is smaller than that of the second lattice comprised of the outlet flow paths 215. Therefore pieces of debris with such a size that the first plates 203 do not allow them to flow through are not caught by the second plates 204. Such pieces of debris pass through the second plates 204, flow into bent flow paths 214, which are formed by the bent plates, and are finally caught by the first plates 203. When the flow of coolant is stopped in this situation, or when the fuel assemblies with this debris filter are taken out of coolant, the pieces of debris captured within the bent flow paths 214 are prevented from being discharged from the debris filter 201. As a result, debris that has fallen outside the debris filter 201, for example onto the bottom of the nuclear reactor, is prevented from flowing into the fuel assemblies when circulation of the coolant is restarted.

The manners of fixing the bent plates 202 to the first plates 203 and the second plates 204 may be the same as the manners which have been explained with the debris filter shown in Figures 1-3. For example, slots are formed in the first and second plates 203, 204 and/or the bent plates 202, and then plates are inserted into the slots or the slots are engaged with the slots.

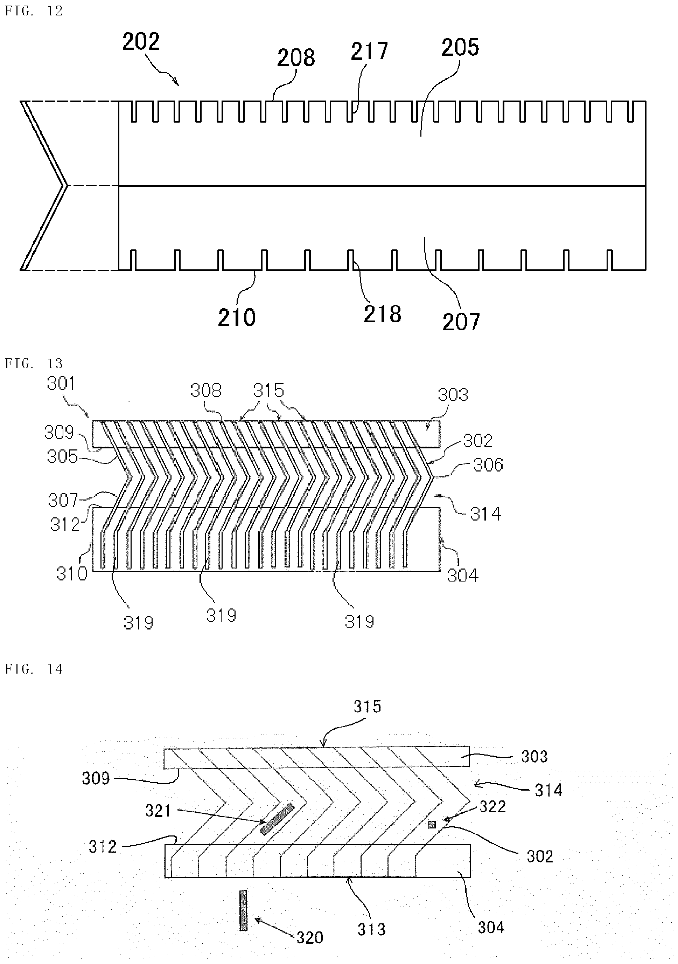

Figure 11 shows one of the first plates 203 of the debris filter 201 shown in Figures 9 and 10, and Figure 12 one of the bent plates 202. The first plate 203 has a plurality of first inclined slots 216 formed in a first inner longitudinal edge 209, which runs along the longer side of the first plate 203. The first slots are inclined in relation to the first inner longitudinal edge. The first plates 203 are the same as the second plates 204 thereof in dimensions; a first plate 203 formed as shown in Figure 11 may be used also as a second plate 204. As shown in Figure 12, the bent plate 202 has a plurality of first perpendicular slots 217 formed in a first longitudinal edge 208 at first regular intervals, the first perpendicular slots formed perpendicularly to the first longitudinal edge, and a plurality of second perpendicular slots 18 in a second longitudinal edge 210 at second regular intervals, the second perpendicular slots formed perpendicularly to the second longitudinal edge. The debris filter 201 of this example has the plurality of first perpendicular slots 217 formed in each first longitudinal edge 208, the number of which is larger than the number of second perpendicular slots 218 formed in each second longitudinal edge 210. Thus the first plates 203 are fixed to each bent plate 202 at first regular intervals, the second plates 204 are fixed to each bent plate 202 at second regular intervals, and the second distance at which adjacent second plates 204 are fixed to each bent plate 202 is larger than the first distance at which adjacent first plates 203 are fixed to each bent plate 202.

A still another example of the debris filter according to the present invention is shown in Figure 13. The debris filter 301 shown in Figure 13 is different from the debris filter 1 shown in Figure 1 in the following respects: Firstly, each of the bent plates 302 shown in Figure 13 is comprised of a first inclined plate 305, a second inclined plate 307, and a third inclined plate 319, whereas each of the bent plates 202 shown in Figure 9 is comprised of a first inclined plate 205 and a second inclined plate 207. Secondly, the third inclined plates 319 shown in Figure 13 extend parallel with the direction of coolant flow from the inlet flow paths to the outlet flow paths of the debris filter 301, whereas the second inclined plates 207 shown in Figure 9 extend obliquely to the direction of coolant flow from the inlet flow paths to the outlet flow paths of the debris filter 201. Thirdly, the width of each second plate 304, or the length of the shorter edge along the shorter side thereof, shown in Figure 13 is larger than that of each second plate 204 shown in Figure 9.

In the debris filter 201 shown in Figure 9, the first plates 203 and the second plates 204 have a same shape and same dimensions. Furthermore, the number of first inclined slots 216 formed in each first inner longitudinal edge 209, running along the longer side of each first plate 203, and the depth of each first inclined slot are respectively the same as the number of second inclined slots formed in each second inner longitudinal edge 212, running along the longer side of each second plate 204, and the depth of each second inclined slot.

On the other hand, in the debris filter 301 shown in Figure 13, the width of each second plate 304 is smaller than the total of the width, or the length of the shorter edge along the shorter side, of each third inclined plate 319 and the width, or the length along the shorter side, of each second inclined plate 307, and is larger than the width of each third inclined plate 319. In other general embodiments, the width of each second plate 304, or the length of shorter edge thereof, may be equal with or shorter than the width of the third inclined plate 319.

Liquid such as coolant is allowed to flow into the debris filter 301 shown in Figure 13 from the free end of the third inclined plates 319. The liquid is introduced into divided spaces formed by adjacent third inclined plates 319 and adjacent second plates 304, and rectified in the divided spaces. It is introduced into and further rectified in the spaces formed by adjacent second inclined plates 307 and adjacent second plates 304. Then, the liquid flows into inner spaces between first inner longitudinal edges 309 of the aligned first plates 303 and inner longitudinal edges 312 of the second plates 304, the spaces formed by the aligned bent plates 302. The liquid is subsequently introduced into divided flow paths formed by adjacent first inclined plates 305 and adjacent first plates 303, and is finally allowed to flow out of the debris filter 301.

We will explain liquid flow in the debris filter in more detail, referring to Figure 14. A piece of debris 320 in the shape of a needle or a piece of wire included in liquid, such as coolant, flows into a space formed by the third inclined plates 319 and the second plates 304, wherein the piece of debris is in a position generally perpendicularly to the second plates 304 and the bent plate 302. Because the third inclined plates 319 run from bottom to top in the sheet including Figure 13, the piece of debris in the shape of a needle, together with the liquid, tends to easily come into the debris filter 301. Then, the piece of debris in the shape of a needle flows into an obliquely arranged flow path formed by adjacent second inclined plates 307 and adjacent second plates 304, which obliquely arranged flow path communicates with the flow path formed by adjacent bent plates 302, located between the inner longitudinal edges 309 of the first plates 303 and the inner longitudinal edges 312 of the second plates 304. Until this point of the travel the piece of debris in the shape of a needle has become inclined 321 in relation to the direction of liquid flow. This position is caused by turbulent flow created by complicated flow paths in the debris filter 301. The inclined piece of debris becomes further inclined 322 so that it also turns oblique to the longitudinal side of the bent plates 302. The piece of debris in the position 321 or 322 is not able to pass through the outlet flow path 315 formed by adj acent first plates 303 and first bent plates 302, because the sectional area of each outlet flow path 315 formed by adjacent first plates 303 and adjacent bent plates 302 is smaller than that of each inlet flow path 314 formed by adjacent second plates 304 and adjacent bent plates 302.

When the flow of coolant passing through the debris filter is stopped in this situation, or when this debris filter is taken out of the liquid, it is difficult for such pieces of debris caught within the bent flow paths formed by the bent plates 302 between the inner longitudinal edges 309 of the first plates and the inner longitudinal edges 312 of the second plates 304, and for those caught within the flow paths formed by the second plates 304 and the bent plates 302 to leave the debris filter 301 and to flow away to the outside.

The manners of fixing the bent plates 302 to the first plates 303 and the second plates 304 may be the same as the manners which have been explained with the debris filter shown in Figures 1-3. For example, slots are formed in the first and second plates 303, 304 and/or the bent plates 302, and then plates are inserted into the slots or the slots are engaged with the slots.

### EXPLANATION OF REFERENCE SIGNS

1, 101, 201, 301: debris filter
2, 102, 202, 302: bent plate
3, 103, 203, 303: first plate
4, 104, 204, 304: second plate
5, 105, 205, 305: first inclined plate
6, 106, 206, 306, 9, 109, 209, 309, 12, 112, 212, 312, 23, 123, 24, 124: longitudinal edge
7, 107, 207, 307: second inclined plate
8, 108, 208, 308: first longitudinal edge
10, 110, 210, 310: second longitudinal edge
13, 113, 213, 313: inlet flow path
14, 114, 214, 314: bent flow path
15, 115, 215, 315: outlet flow path
16, 216: first inclined slot
17, 217: first perpendicular slot
18, 218: second perpendicular slot
319: third inclined plate
320: a piece of debris in the shape of a needle
321: the piece of debris in the shape of a needle inclined in relation
to the direction of liquid flow
322: the inclined piece of debris in the shape of a needle also turning oblique to the longitudinal side of the bent plates

## Claims

1. A debris filter comprising a plurality of bent plates having a same bent shape, a plurality of first plates having a same first shape, and a plurality of second plates having a same second shape, wherein
each of the first plates is in the shape of a strip;
each of the second plates is in the shape of a strip;
each of the bent plates is composed of a first inclined plate in the shape of a strip, and a second inclined plate in the shape of a strip, wherein the first inclined plate shares a longitudinal edge with the second inclined plate; wherein
the bent plates are arranged so that the first inclined plates are parallel with each other and the second inclined plates are parallel with each other;
the bent plates and the first plates are fixed with each other so that the first plates intersect a first longitudinal edge of each first inclined plate, the first longitudinal edge facing the longitudinal edge that the first inclined plate shares with the second inclined plate;
the bent plates and the second plates are fixed with each other so that the second plates intersect a second longitudinal edge of each second inclined plate, the second longitudinal edge facing the longitudinal edge that the second inclined plate shares with the first inclined plate; and
a first inner longitudinal edge of the first plates, the first inner longitudinal edge facing an opposite second plate, does not touch a second inner longitudinal edge of the opposite second plate, the second inner longitudinal edge facing an opposite first plate, whereby the debris filter has bent flow paths formed by the adjacent bent plates, between outlet flow paths formed by the adjacent first plates and the adjacent first inclined plates, and inlet flow paths formed by the adjacent second plates and the adjacent second inclined plates.

2. The debris filter according to claim 1, wherein
each of the first plates has a plurality of first inclined slots in the first inner longitudinal edge, the first slots inclined in relation to the first inner longitudinal edge;
each of the second plates has a plurality of second inclined slots in the second inner longitudinal edge, the second slots inclined in relation to the second inner longitudinal edge;
the first longitudinal edge of each bent plate is inserted into one of the first inclined slots of each first plate and fixed thereto; and
the second longitudinal edge of each bent plate is inserted into one of the second inclined slots of each second plate and fixed thereto.

3. The debris filter according to claim 2, wherein each of the bent plates has a plurality of first perpendicular slots in the first longitudinal edge, the first perpendicular slots formed perpendicularly to the first longitudinal edge, and a plurality of second perpendicular slots in the second longitudinal edge, the second perpendicular slots formed perpendicularly to the second longitudinal edge; and
each bent plate is joined with the first plates in such a manner that the first perpendicular slots mesh with the first inclined slots, and each bent plate is joined with the second plates in such a manner that the second perpendicular slots mesh with the second inclined slots.

4. The debris filter according to claim 3, wherein the number of first perpendicular slots in each bent plate is the same as the number of first inclined slots in each first plate; the number of second perpendicular slots in each bent plate is the same as the number of second inclined slots in each second plate; and the number of bent plates is the same as the number of first inclined slots.

5. The debris filter according to claim 1, wherein
each of the bent plates has a plurality of first perpendicular slots in the first longitudinal edge, the first perpendicular slots formed perpendicularly to the first longitudinal edge, and a plurality of second perpendicular slots in the second longitudinal edge, the second perpendicular slots formed perpendicularly to the second longitudinal edge;
the first inner longitudinal edge of each first plate is inserted into one of the first perpendicular slots of each bent plate and fixed thereto; and
the second inner longitudinal edge of each secondplate is inserted into one of the second perpendicular slots of each bent plate and fixed thereto.

6. The debris filter according to claim 1, wherein the first plates are fixed to the bent plates at a first regular interval, and the second plates are fixed to the bent plates at a second regular interval, wherein the second regular interval is larger than the first regular interval.

7. The debris filter according to claim 6, wherein
each of the first plates has a plurality of first inclined slots in the first inner longitudinal edge, the first slots inclined in relation to the first inner longitudinal edge;
each of the second plates has a plurality of second inclined slots in the second inner longitudinal edge, the second slots inclined in relation to the second inner longitudinal edge;
the first longitudinal edge of each bent plate is inserted into one of the first inclined slots of each first plate and fixed thereto; and
the second longitudinal edge of each bent plate is inserted into one of the second inclined slots of each second plate and fixed thereto.

8. The debris filter according to claim 7, wherein each of the bent plates has a plurality of first perpendicular slots in the first longitudinal edge, the first perpendicular slots formed perpendicularly to the first longitudinal edge, and a plurality of second perpendicular slots in the second longitudinal edge, the second perpendicular slots formed perpendicularly to the second longitudinal edge; and
each bent plate is joined with the first plates in such a manner that the first perpendicular slots mesh with the first inclined slots, and each bent plate is joined with the second plates in such a manner that the second perpendicular slots mesh with the second inclined slots.

9. The debris filter according to claim 6, wherein
each bent plate has a plurality of first perpendicular slots in the first longitudinal edge, the first perpendicular slots formed perpendicularly to the first longitudinal edge, and a plurality of second perpendicular slots in the second longitudinal edge, the second perpendicular slots formed perpendicularly to the second longitudinal edge;
the first inner longitudinal edge of each first plate is inserted into one of the first perpendicular slots of each bent plate and fixed thereto; and
the second inner longitudinal edge of each secondplate is inserted into one of the second perpendicular slots of each bent plate and fixed thereto.

## Patentansprüche

1. Teilchenfilter, aufweisend mehrere gebogene Platten von gleicher gebogener Form, mehrere erste Platten von gleicher erster Form und mehrere zweiter Platten von gleicher Form, wobei
jede der ersten Platten die Form eines Streifens aufweist;
jede der zweiten Platten die Form eines Streifens aufweist;
jede der gebogenen Platten aus einer ersten geneigten Platte in Form eines Streifens und einer zweiten geneigten Platte in Form eines Streifens zusammengesetzt ist, wobei die erste geneigte Platte eine Längskante mit der zweiten geneigten Platte gemeinsam hat; wobei
die gebogenen Platten so angeordnet sind, dass die ersten geneigten Platten parallel zueinander sind und die zweiten geneigten Platten parallel zueinander sind;
die gebogenen Platten und die ersten Platten aneinander befestigt sind, so dass die ersten Platten eine erste Längskante jeder ersten geneigten Platte überschneiden, die erste Längskante der Längskante zugewandt ist, die die erste geneigte Platte mit der zweiten geneigten Platte gemeinsam hat;
die gebogenen Platten und die zweiten Platten aneinander befestigt sind, so dass die zweiten Platten eine zweite Längskante jeder zweiten geneigten Platte überschneiden, die zweite Längskante der Längskante zugewandt ist, die die zweite geneigte Platte mit der ersten geneigten Platte gemeinsam hat; und
eine erste innere Längskante der ersten Platten, wobei die erste innere Längskante einer gegenüberliegenden zweiten Platte zugewandt ist, keinen Kontakt mit einer zweiten inneren Längskante der gegenüberliegenden zweiten Platte hat, die zweite innere Längskante einer gegenüberliegenden ersten Platte zugewandt ist, wobei das Teilchenfilter gekrümmte Strömungswege aufweist, die von den angrenzenden gebogenen Platten gebildet sind, zwischen Auslassströmungswegen, die von den angrenzenden ersten Platten und den angrenzenden ersten geneigten Platten gebildet sind, und Einlassströmungswegen, die die von den angrenzenden zweiten Platten und den angrenzenden zweiten geneigten Platten gebildet sind.

2. Teilchenfilter nach Anspruch 1, wobei
jede der ersten Platten mehrere erste geneigte Schlitze in der ersten inneren Längskante aufweist, wobei die ersten Schlitze im Verhältnis zur ersten inneren Längskante geneigt sind;
jede der zweiten Platten mehrere zweite geneigte Schlitze in der zweiten inneren Längskante aufweist, wobei die zweiten Schlitze im Verhältnis zur zweiten inneren Längskante geneigt sind;
die erste Längskante jeder gebogenen Platte in einen der ersten geneigten Schlitze jeder ersten Platte eingesetzt und an dieser befestigt ist; und
die zweite Längskante jeder gebogenen Platte in einen der zweiten geneigten Schlitze jeder zweiten Platte eingesetzt und an dieser befestigt ist.

3. Teilchenfilter nach Anspruch 2, wobei jede der gebogenen Platten mehrere erste rechtwinklige Schlitze in der ersten Längskante aufweist, die ersten rechtwinkligen Schlitze rechtwinklig zur ersten Längskante gebildet sind, und mehrere zweite rechtwinklige Schlitze in der zweiten Längskante aufweist, die zweiten rechtwinkligen Schlitze rechtwinklig zur zweiten Längskante gebildet sind; und
jede gebogene Platte mit den ersten Platten auf solche Art verbunden ist, dass die ersten rechtwinkligen Schlitze mit den ersten geneigten Schlitzen im Eingriff sind und jede gebogene Platte mit den zweiten Platten auf solche Art verbunden ist, dass die zweiten rechtwinkligen Schlitze mit den zweiten geneigten Schlitzen im Eingriff sind.

4. Teilchenfilter nach Anspruch 3, wobei die Anzahl erster rechtwinkliger Schlitze in jeder gebogenen Platte die gleiche ist wie die Anzahl erster geneigter Schlitze in jeder ersten Platte; die Anzahl zweiter rechtwinkliger Schlitze in jeder gebogenen Platte die gleiche ist wie die Anzahl zweiter geneigter Schlitze in jeder zweiten Platte; und die Anzahl gebogener Platten die gleiche ist wie die Anzahl erster geneigter Schlitze.

5. Teilchenfilter nach Anspruch 1, wobei
jede der gebogenen Platten mehrere erste rechtwinklige Schlitze in der ersten Längskante aufweist, die ersten rechtwinkligen Schlitze rechtwinklig zur ersten Längskante gebildet sind, und mehrere zweite rechtwinklige Schlitze in der zweiten Längskante aufweist, die zweiten rechtwinkligen Schlitze rechtwinklig zur zweiten Längskante gebildet sind;
die erste innere Längskante jeder ersten Platte in einen der ersten rechtwinkligen Schlitze jeder gebogenen Platte eingesetzt und daran befestigt ist; und
die zweite innere Längskante jeder zweiten Platte in einen der zweiten rechtwinkligen Schlitze jeder gebogenen Platte eingesetzt und daran befestigt ist.

6. Teilchenfilter nach Anspruch 1, wobei die ersten Platten an den gebogenen Platten in einem ersten regelmäßigen Intervall befestigt sind, und die zweiten Platten an den gebogenen Platten in einem zweiten regelmäßigen Intervall befestigt sind, wobei das zweite regelmäßige Intervall größer ist als das erste regelmäßige Intervall.

7. Teilchenfilter nach Anspruch 6, wobei
jede der ersten Platten mehrere erste geneigte Schlitze in der ersten inneren Längskante aufweist, wobei die ersten Schlitze im Verhältnis zur ersten inneren Längskante geneigt sind;
jede der zweiten Platten mehrere zweite geneigte Schlitze in der zweiten inneren Längskante aufweist, wobei die zweiten Schlitze im Verhältnis zur zweiten inneren Längskante geneigt sind;
die erste Längskante jeder gebogenen Platte in einen der ersten geneigten Schlitze jeder ersten Platte eingesetzt und an dieser befestigt ist; und
die zweite Längskante jeder gebogenen Platte in einen der zweiten geneigten Schlitze jeder zweiten Platte eingesetzt und an dieser befestigt ist.

8. Teilchenfilter nach Anspruch 7, wobei jede der gebogenen Platten mehrere erste rechtwinklige Schlitze in der ersten Längskante aufweist, die ersten rechtwinkligen Schlitze rechtwinklig zur ersten Längskante gebildet sind, und mehrere zweite rechtwinklige Schlitze in der zweiten Längskante aufweist, die zweiten rechtwinkligen Schlitze rechtwinklig zur zweiten Längskante gebildet sind; und
jede gebogene Platte mit den ersten Platten auf solche Art verbunden ist, dass die ersten rechtwinkligen Schlitze mit den ersten geneigten Schlitzen im Eingriff sind, und jede gebogene Platte mit den zweiten Platten auf solche Art verbunden ist, dass die zweiten rechtwinkligen Schlitze mit den zweiten geneigten Schlitzen im Eingriff sind.

9. Teilchenfilter nach Anspruch 6, wobei
jede gebogene Platte mehrere erste rechtwinklige Schlitze in der ersten Längskante aufweist, die ersten rechtwinkligen Schlitze rechtwinklig zur ersten Längskante gebildet sind, und mehrere zweite rechtwinklige Schlitze in der zweiten Längskante aufweist, die zweiten rechtwinkligen Schlitze rechtwinklig zur zweiten Längskante gebildet sind;
die erste innere Längskante jeder ersten Platte in einen der ersten geneigten Schlitze jeder gebogenen Platte eingesetzt und an dieser befestigt ist; und
die zweite innere Längskante jeder zweiten Platte in einen der zweiten geneigten Schlitze jeder gebogenen Platte eingesetzt und an dieser befestigt ist.

## Revendications

1. Filtre de débris comprenant une pluralité de plaques pliées ayant une forme pliée identique, une pluralité de premières plaques ayant une première forme identique, et une pluralité de secondes plaques ayant une seconde forme identique, dans lequel :
chacune des premières plaques se présente sous la forme d'une bande ;
chacune des secondes plaques se présente sous la forme d'une bande ;
chacune des plaques pliées est composée d'une première plaque inclinée sous la forme d'une bande, et d'une seconde plaque inclinée sous la forme d'une bande, dans lequel la première plaque inclinée partage un bord longitudinal avec la seconde plaque inclinée ; dans lequel
les plaques pliées sont agencées de sorte que les premières plaques inclinées sont parallèles entre elles et que les secondes plaques inclinées sont parallèles entre elles ;
les plaques pliées et les premières plaques sont fixées entre elles de sorte que les premières plaques coupent un premier bord longitudinal de chaque première plaque inclinée, le premier bord longitudinal faisant face au bord longitudinal que la première plaque inclinée partage avec la seconde plaque inclinée ;
les plaques pliées et les secondes plaques sont fixées entre elles de sorte que les secondes plaques coupent un second bord longitudinal de chaque seconde plaque inclinée, le second bord longitudinal faisant face au bord longitudinal que la seconde plaque inclinée partage avec la première plaque inclinée ; et
un premier bord longitudinal interne des premières plaques, le premier bord longitudinal interne faisant face à une seconde plaque opposée, n'est pas en contact avec un second bord longitudinal interne de la seconde plaque opposée, le second bord longitudinal interne faisant face à une première plaque opposée, moyennant quoi le filtre de débris a des trajectoires d'écoulement courbées formées par les plaques pliées adjacentes, entre des trajectoires d'écoulement de sortie formées par les premières plaques adjacentes et des premières plaques inclinées adjacentes, et des trajectoires d'écoulement d'entrée formées par les secondes plaques adjacentes et les secondes plaques inclinées adjacentes.

2. Filtre de débris selon la revendication 1, dans lequel :
chacune des premières plaques a une pluralité de premières fentes inclinées dans le premier bord longitudinal interne, les premières fentes étant inclinées par rapport au premier bord longitudinal interne ;
chacune des secondes plaques a une pluralité de secondes fentes inclinées dans le second bord longitudinal interne, les secondes fentes étant inclinées par rapport au second bord longitudinal interne ;
le premier bord longitudinal de chaque plaque pliée est inséré dans l'une des premières fentes inclinées de chaque première plaque et fixé à cette dernière ; et
le second bord longitudinal de chaque plaque pliée est inséré dans l'une des secondes fentes inclinées de chaque seconde plaque et fixé à cette dernière.

3. Filtre de débris selon la revendication 2, dans lequel chacune des plaques pliées a une pluralité de premières fentes perpendiculaires dans le premier bord longitudinal, les premières fentes perpendiculaires étant formées perpendiculairement au premier bord longitudinal, et une pluralité de secondes fentes perpendiculaires dans le second bord longitudinal, les secondes fentes perpendiculaires étant formées perpendiculairement au second bord longitudinal ; et
chaque plaque pliée est assemblée avec les premières plaques de sorte que les premières fentes perpendiculaires s'engagent avec les premières fentes inclinées, et chaque plaque est assemblée avec les secondes plaques de sorte que les secondes fentes perpendiculaires s'engagent avec les secondes fentes inclinées.

4. Filtre de débris selon la revendication 3, dans lequel le nombre de premières fentes perpendiculaires
dans chaque plaque pliée est le même que le nombre de premières fentes inclinées dans chaque première plaque ; le nombre de secondes fentes perpendiculaires dans chaque plaque pliée est le même que le nombre de secondes fentes inclinées dans chaque seconde plaque ; et le nombre de plaques pliées est le même que le nombre de premières fentes inclinées.

5. Filtre de débris selon la revendication 1, dans lequel :
chacune des plaques pliées a une pluralité de premières fentes perpendiculaires dans le premier bord longitudinal, les premières fentes perpendiculaires étant formées perpendiculairement au premier bord longitudinal, et une pluralité de secondes fentes perpendiculaires dans le second bord longitudinal, les secondes fentes perpendiculaires étant formées perpendiculairement au second bord longitudinal ;
le premier bord longitudinal interne de chaque première plaque est inséré dans l'une des premières fentes perpendiculaires de chaque plaque pliée, et fixé à cette dernière ; et
le second bord longitudinal interne de chaque seconde plaque est inséré dans l'une des secondes fentes perpendiculaires de chaque plaque pliée et fixé à cette dernière.

6. Filtre de débris selon la revendication 1, dans lequel les premières plaques sont fixées aux plaques pliées à un premier intervalle régulier, et les secondes plaques sont fixées aux plaques pliées à un second intervalle régulier, dans lequel le second intervalle régulier est supérieur au premier intervalle régulier.

7. Filtre de débris selon la revendication 6, dans lequel :
chacune des premières plaques a une pluralité de premières fentes inclinées dans le premier bord longitudinal interne, les premières fentes étant inclinées par rapport au premier bord longitudinal interne ;
chacune des secondes plaques a une pluralité de secondes fentes inclinées dans le second bord longitudinal interne, les secondes fentes étant inclinées par rapport au second bord longitudinal interne ;
le premier bord longitudinal de chaque plaque pliée est inséré dans l'une des premières fentes inclinées de chaque première plaque et fixé à cette dernière ; et
le second bord longitudinal de chaque plaque pliée est inséré dans l'une des secondes fentes inclinées de chaque seconde plaque et fixé à cette dernière.

8. Filtre de débris selon la revendication 7, dans lequel chacune des plaques pliées a une pluralité de premières fentes perpendiculaires dans le premier bord longitudinal, les premières fentes perpendiculaires étant formées de manière perpendiculaire au premier bord longitudinal, et une pluralité de secondes fentes perpendiculaires dans le second bord longitudinal, les secondes fentes perpendiculaires étant formées perpendiculairement au second bord longitudinal ; et
chaque plaque pliée est assemblée aux premières plaques de sorte que les premières fentes perpendiculaires s'engagent avec les premières fentes inclinées, et chaque plaque pliée est assemblée avec les secondes plaques de sorte que les secondes fentes perpendiculaires s'engagent avec les secondes fentes inclinées.

9. Filtre de débris selon la revendication 6, dans lequel :
chaque plaque pliée a une pluralité de premières fentes perpendiculaires dans le premier bord longitudinal, les premières fentes perpendiculaires étant formées perpendiculairement au premier bord longitudinal, et une pluralité de secondes fentes perpendiculaires dans le second bord longitudinal, les secondes fentes perpendiculaires étant formées perpendiculairement au second bord longitudinal ;
le premier bord longitudinal interne de chaque première plaque est inséré dans l'une des premières fentes perpendiculaires de chaque plaque pliée et fixé à cette dernière ; et
le second bord longitudinal interne de chaque seconde plaque est inséré dans l'une des secondes fentes perpendiculaires de chaque plaque pliée et fixé à cette dernière.
